# EUROPÄISCHE PATENTSCHRIFT

(11) **EP 0 894 352 B1**
(45) Veröffentlichungstag und Bekanntmachung des Hinweises auf die Patenterteilung: **07.05.2003**
(21) Anmeldenummer: 98903006.9
(22) Anmeldetag: 14.01.1998
(51) Int. Cl.: H02G 3/18

(54) **SCHNURAUSLASS FÜR UNTERFLURGERÄTEDOSEN**
FLEX OUTLET FOR FLUSH-MOUNTED APPLIANCE SOCKETS
SORTIE DE CABLE POUR CONNECTEUR D'APPAREIL ENCASTRE

(30) Priorität: 04.02.1997 DE 29701862 U
(43) Veröffentlichungstag der Anmeldung: 03.02.1999
(73) Patentinhaber: Albert Ackermann GmbH & Co. KG, 51643 Gummersbach (DE)
(72) Erfinder: RASCHKE, Jörg, D-51674 Wiehl (DE)
(74) Vertreter: Patentanwälte Ruff, Wilhelm, Beier, Dauster & Partner
(86) Internationale Anmeldenummer: EP9800184
(87) Internationale Veröffentlichungsnummer: WO98034310

(56) Entgegenhaltungen:
- DE-U- 7 511 354
- FR-A- 2 154 718

## Beschreibung

Die Erfindung betrifft eine Unterflurgerätedose mit einem Schnurauslass und mit einem aufklappbaren Deckel, in dem eine Aussparung zum Durchführen von Anschlußleitungen bei geschlossenem Deckel vorgesehen ist, die mit einer Klappe verschließbar ist, wobei die Klappe sowohl in geschlossener als auch in offener Stellung von einem Auflagestück unterstützt wird und arretierbar ist.

Aus dem DE-GM 75 11 354 sind Unterflurgerätedosen bekannt, die eingebaut in den Fußboden mit einem aufklappbaren Deckel versehen sind, der schwenkbar mit der Gerätedose verbunden ist. Eine Aussparung in dem Deckel ist mit einer schwenkbar fest an dem Deckel angebrachten Klappe verschließbar, wobei diese in geschlossener Stellung bündig mit einem die Gerätedose auf dem Fußboden abstützenden Flansch abschließt. Das die Klappe unterstützende Auflagestück ist integraler Bestandteil der Gerätedose. Ein Abnehmen der Klappe von dem sie tragenden Deckel ist nicht vorgesehen.

Bei der Verwendung von Unterflurgerätedosen der genannten Art auf stein- oder parkettbelegten Fußböden, die beispielsweise abschleifbar sind, ergibt sich auch bei einem Wegfall des Gerätedosenflansches das Problem, daß zwar der klappbare Deckel der Gerätedose, aber nicht die Klappe des Schnurauslasses mit dem Material des Fußbodenbelages belegt werden kann. Bei einer materialabtragenden Behandlung des Fußbodenbelages würde eine Schnurauslaßklappe aus Metall oder Kunststoff gemäß der bekannten Bauart beschädigt, da sie näherungsweise fußbodenbündig installiert ist und mitbehandelt würde. Ein Ausbau der Schnurauslaßklappe vor der Fußbodenbehandlung kann nicht vorgesehen werden, da die Gerätedose auch und gerade bei der Fußbodenbehandlung vollständig geschlossen sein sollte, um Verschmutzungen und Beschädigungen der Elektroinstallationsgeräte zu vermeiden. Ferner wird durch eine materialabtragende Behandlung eine Änderung der Höhe des Fußbodenbelages bewirkt, an die bisherige Schnurauslässe nicht angepaßt werden können.

Aufgabe der Erfindung ist es, eine Unterflurgerätedose der eingangs genannten Art zu schaffen, deren Bauteile bei einer materialabtragenden Behandlung des Fußbodenbelages nicht beeinträchtigt werden und ihre Dichtfunktion uneingeschränkt wahrnehmen, und die exakt an eine veränderliche Höhe des Fußbodenbelages anpaßbar ist.

Diese Aufgabe wird durch die Kennzeichnend Merkmale des Patentanspruches 1 gelöst. Durch diese Ausgestaltung wird eine Unterflurgerätedose mit einem höhenverstellbaren Schnurauslaß geschaffen, der einerseits unter das Fußbodenniveau versenkbar ist, wenn der Fußbodenbelag mechanisch behandelt wird, wobei der mit seiner Klappe verschließbare Schnurauslaß auch im versenkten Zustand zusammen mit dem aufklappbaren Deckel die Gerätedose vollständig gegenüber Verschmutzungen abdichtet. Andererseits ist durch die Verstellbarkeit des Schnurauslasses dessen Oberkante auf die Höhe des Fußbodens nivellierbar. Dadurch wird erreicht, daß auch nach wiederholtem Materialabtrag und damit reduzierter Höhe des Fußbodenbelages, der auch in dem aufklappbaren Deckel der Gerätedose verlegt ist, die Unterflurgerätedose einschließlich ihres Auslasses mit dem Fußbodenbelag bündig verlaufend eingestellt werden kann.

In Ausgestaltung der Erfindung wird die Verschiebbarkeit der Rahmenteile durch in den Rahmenteilen senkrecht zur Ebene des geschlossenen aufklappbaren Deckels angeordnete Langlöcher ermöglicht, durch die Schraubenbolzen geführt sind, die für den ersten Teil des Rahmens an dem aufklappbaren Deckel und für den zweiten Teil des Rahmens an der Gerätedose lösbar befestigt sind. Dadurch wird erreicht, daß bei gelösten Schrauben die Rahmenteile verschoben werden können, während durch Anziehen der Schrauben die Rahmenteile fixiert werden können, um in einfacher Weise die Rahmenteile in eine geeignete Höhenposition zu bringen und dort festzustellen.

In weiterer Ausgestaltung der Erfindung sind die Rahmenteile samt schwenkbar gelagerter Klappe von dem aufklappbaren Dekkel und der Gerätedose abnehmbar. Dadurch wird es gestattet, daß der Schnurauslaß ausgetauscht oder getrennt gereinigt werden kann.

Die nachfolgende Beschreibung stellt ein bevorzugtes Ausführungsbeispiel der Erfindung anhand der Zeichnungen dar.

Hierbei zeigen
- Fig. 1: in einer schematischen Schnittansicht einen in eine Unterflurgerätedose eingebauten Schnurauslaß mit geschlossenem aufklappbarem Deckel (mit strichpunktiert angedeuteter geöffneter und gestrichelt gezeichneter geschlossener schwenkbarer Klappe),
- Fig. 2: den eingebauten Schnurauslaß in einem Schnitt entlang der Schnittlinie II-II in Fig. 1 ohne Darstellung der schwenkbaren Klappe,
- Fig. 3: in einer perspektivischen Ansicht denjenigen Teilbereich eines aufklappbaren Deckels, in den der erste Teil des Schnurauslaßrahmens eingebaut wird,
- Fig. 4: in einer perspektivischen Ansicht ein Ausführungsbeispiel des U-förmig ausgebildeten ersten Teils des Schnurauslaßrahmens und
- Fig. 5: in einer weiteren perspektivischen Ansicht ein Ausführungsbeispiel des zweiten Rahmenteils des Schnurauslaßrahmens.

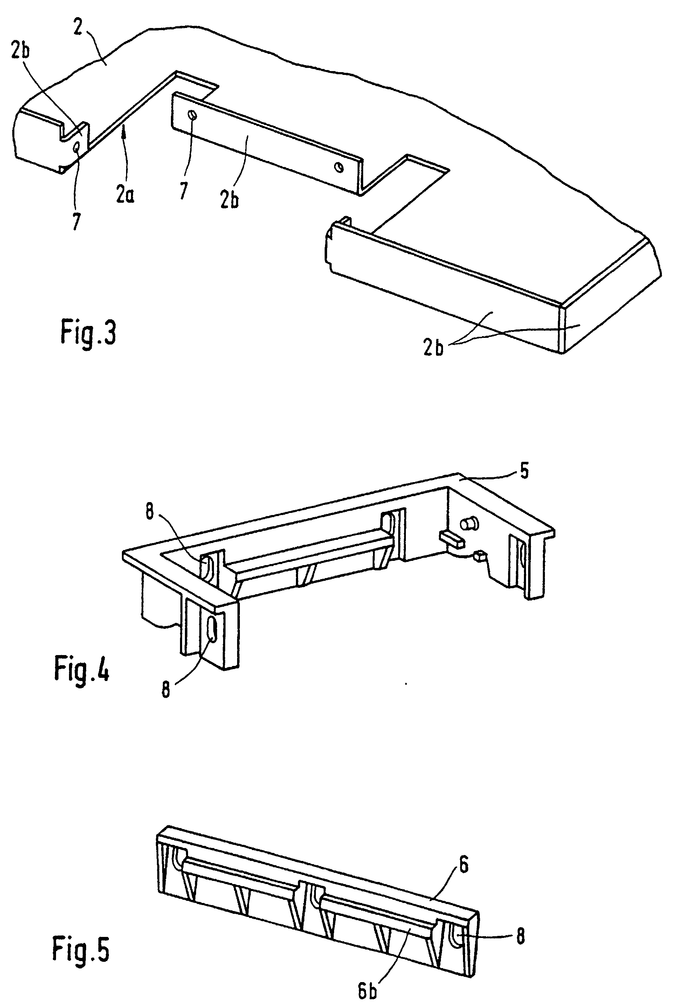

Eine Unterflurgerätedose 1 weist in an sich bekannter Weise einen aufklappbaren Deckel 2 auf, der eine schwenkbare Klappe 3, 3a trägt, die in ihrer Ruheposition 3 eine Schnurauslaßöffnung in dem aufklappbaren Deckel 2 verschließt und in ihrer geöffneten Stellung 3a das Durchführen von Anschlußleitungen gestattet. Die Schnurauslaßöffnung wird freigegeben durch eine entsprechende Aussparung 2a im Deckel 2, deren Form aus Fig. 3 ersichtlich ist. Unter Verwendung von V2Aoder Messingblech als Material für den Deckel 2 kann die Aussparung 2a leicht durch Ausstanzen hergestellt werden. Dabei sollten die später durch Abkanten aus dem Blech des Deckels zu formenden Seitenteile 2b des Deckels berücksichtigt werden, die außerdem Bohrungen 7 zur Befestigung eines Rahmenteils 5 am Deckel aufweisen, auf dessen Bedeutung noch eingegangen wird. Anzahl und Größe der Bohrungen sind prinzipiell beliebig und nur durch die Erfordernisse der Beanspruchung bedingt.

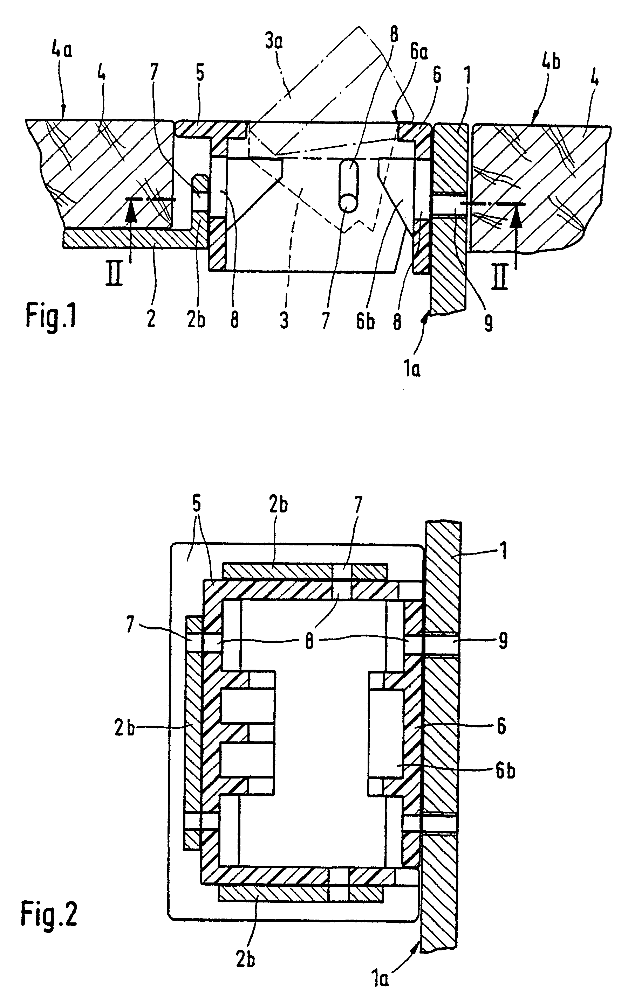

Der gemäß Fig. 3 ausgestaltete Deckel 2 kann, wie in Fig. 1 dargestellt, mit dem Fußbodenmaterial 4, vorzugsweise Parkett, belegt werden, so daß die äußere Oberfläche 4a des Dekkels gleich ist wie die übrige Fußbodenfläche 4b. Die Oberflächen 4a und 4b sind aufgrund einer möglichen materialabtragenden Behandlung des Fußbodens, beispielsweise bei einem Schleifen des Parketts, in ihrer Höhe nicht unveränderlich; das bedeutet insbesondere, daß sich die Höhe reduzieren kann. Diesem Umstand wird dadurch Rechnung getragen, daß die Klappe 3, 3a auf zwei vorzugsweise aus Kunststoff hergestellten, in die Schnurauslaßöffnung des Deckels eingesetzten Rahmenteilen 5 und 6 gelagert wird, wobei diese Rahmenteile in der Aussparung 2a des Deckels und in der Gerätedose 1 verschieblich angeordnet sind. Dies wird dadurch erreicht, daß einerseits in dem U-förmigen Rahmenteil 5 Langlöcher 8 vorgesehen werden, durch die hindurch beispielsweise Schraubenbolzen (nicht dargestellt) geführt und lösbar in den Bohrungen 7 des Deckels 2 befestigt werden, so daß das Rahmenteil 5 locker geführt oder am Deckel 2 fixiert werden kann.

Andererseits wird, wie aus den Fig. 1 und 2 ersichtlich ist, zur Komplettierung des Auflagerahmens ein zweites Rahmenteil 6 zwischen die Schenkel des U-förmigen Rahmenteils 5 eingepaßt und an der Wandung 1a der Gerätedose 1 befestigt. Das Rahmenteil 6 muß nicht zwingend durch die Schenkel des Rahmenteils 5 umfaßt werden, dies ist lediglich für eine stabile Lagerung des klappbaren Deckels 2 in der Ruheposition vorteilhaft, da eine Passung an der Stelle des Schnurauslasses zwischen den beiden Rahmenteilen einfach realisiert werden kann. Für eine optimale Lagerung des zweiten Rahmenteils 6 ist dieses allerdings an die Innenkontur der Gerätedose anzupassen. Das zweite Rahmenteil 6 weist, wie in Fig. 5 gezeigt, ebenfalls Langlöcher 8 auf, durch die wie beim Rahmenteil 5 Schraubenbolzen (nicht dargestellt) geführt und an der Gerätedose 1 beispielsweise über Gewindebohrungen 9 befestigt sind. Das zweite Rahmenteil 6 umfaßt ferner ein Auflagestück 6b für die Klappe 3, 3a durch die diese in geschlossenem Zustand 3 ausreichend für auftretende Belastungen durch Kräfte von oben in bekannter Weise unterstützt wird. Außerdem kann die Klappe auch in geöffnetem Zustand 3a an der Kante 6a auf dem Rahmenteil 6 aufliegen, wie dies in Fig. 1 strichpunktiert dargestellt ist.

Ein Verschieben der beiden Rahmenteile senkrecht zur Fläche des geschlossenen Deckels geschieht synchron entlang der Langlöcher 8 bei gelockerten Schraubenbolzen, so daß die Klappe ihre zur Fläche des geschlossenen Deckels parallele Ruhelage 3 beibehalten kann. Dadurch kann der Schnurauslaß unter das Fußbodenniveau versenkt werden und vor Beschädigungen während einer materialabtragenden Fußbodenbehandlung geschützt werden. Eine geeignete fußbodenbündige Lage des Schnurauslasses kann nach der Fußbodenbehandlung ebenso wieder eingestellt werden. Durch vollständiges Lösen der Befestigungsmittel können die Rahmenteile ausgebaut werden.

## Patentansprüche

1. Unterflurgerätedose mit einem Schnurauslaß und mit einem aufklappbaren Deckel (2), in dem eine Aussparung (2a) zum Durchführen von Anschlussteitungen bei geschlossenem Deckel vorgesehen ist, die mit einer Klappe (3) verschließbar ist, wobei die Klappe sowohl in geschlossener als auch in offener Stellung von einem Auflagestück (6b) unterstützt wird und arretierbar ist,
**dadurch gekennzeichnet, dass**
die Klappe (3) an einem ersten U-förmigen Teil (5) eines zweiteilig ausgeführten Rahmens (5, 6) schwenkbar gelagert ist, wobei der Rahmen (5, 6) in der Aussparung (2a) des Deckels (2) senkrecht zur Deckelebene entlang einer Gerätedosenwand (1a) verschiebbar gelagert ist, und dass der zweite Teil (6) des Rahmens das Auflagestück (6b) für die Klappe (3) umfasst und an die Innenkontur der Gerätedose angepasst ist.

2. Unterflurgerätedose nach Anspruch 1, **dadurch gekennzeichnet, dass** die Verschiebbarkeit der Rahmenteile (5, 6) durch in den Rahmenteilen senkrecht zur Ebene des geschlossenen aufklappbaren Deckels (2) angeordnete Langlöcher (8) ermöglicht wird, durch die Schraubenbolzen geführt sind, die für den ersten Teil (5) des Rahmens an dem aufklappbaren Deckel (2) und für den zweiten Teil (6) des Rahmens an der Gerätedose (1) lösbar befestigt sind.

3. Unterflurgerätedose nach Anspruch 2, **dadurch gekennzeichnet, dass** die Rahmenteile (5, 6) samt schwenkbar gelagerter Klappe (3) von dem aufklappbaren Deckel (2) und der Gerätedose (1) abnehmbar sind.

## Claims

1. Flush-mounted appliance box with a flex outlet and with a hinged lid (2) in which a recess (2a) is provided for passing through connecting leads when the lid is closed, which recess can be closed by a flap (3), wherein the flap is supported by a support piece (6b) and can be locked both in the closed and in the open position,
**characterised in that**
the flap (3) is pivotably mounted at a first U-shaped part (5) of a two-part frame (5, 6), wherein the frame (5, 6) is mounted in the recess (2a) of the lid (2) such that it can be displaced perpendicularly to the plane of the lid along an appliance box wall (1a), and that the second part (6) of the frame includes the support piece (6b) for the flap (3) and is adapted to the inner contour of the appliance box.

2. Flush-mounted appliance box according to Claim 1,
**characterised in that** the frame parts (5, 6) can be displaced by means of oblong holes (8) which are disposed in the frame parts perpendicularly to the plane of the closed, hinged lid (2) and through which screw bolts are passed, these being secured in a releasable manner to the hinged lid (2) for the first part (5) of the frame and to the appliance box (1) for the second part (6) of the frame.

3. Flush-mounted appliance box according to Claim 2,
**characterised in that** the frame parts (5, 6) together with the pivotably mounted flap (3) can be removed from the hinged flap (2) and the appliance box (1).

## Revendications

1. Connecteur d'appareil encastré avec une sortie de câble et avec un couvercle repliable (2) dans lequel est prévu un évidement (2a) pour faire passer des lignes de raccordement lorsque le couvercle est fermé, qui peut être fermé avec un clapet (3), où le clapet, à la fois en position fermée et aussi en position ouverte, est soutenu par une pièce d'appui (6b) et peut être arrêté, **caractérisé en ce que** le clapet (3) est logé d'une manière pivotante à une première partie en forme de U (5) d'un cadre (5,6) réalisé en deux parties, où le cadre (5, 6) est logé d'une manière déplaçable dans l'évidement (2a) du couvercle (2) perpendiculairement au plan du couvercle le long d'une paroi (1a) du connecteur d'appareil, et **en ce que** la seconde partie (6) du cadre comprend la pièce d'appui (6b) pour le clapet (3) et est adaptée au contour intérieur du connecteur d'appareil.

2. Connecteur d'appareil encastré selon la revendication 1, **caractérisé en ce que** le déplacement des parties de cadre (5,6) est rendu possible par des trous oblongs (8) ménagés dans les parties de cadre perpendiculairement au plan du couvercle repliable fermé (2), à travers lesquels des boulons filetés sont guidés qui sont fixés relâchablement, pour la première partie (5) du cadre, au couvercle repliable (2) et, pour la seconde partie (6) du cadre, au connecteur d'appareil (1).

3. Connecteur d'appareil encastré selon la revendication 2, **caractérisé en ce que** les parties de cadre (5,6) conjointement avec le clapet (3) logé d'une manière pivotante peuvent être enlevés du couvercle repliable (2) et du connecteur d'appareil (1).
